# EUROPEAN PATENT APPLICATION

(11) **EP 1 992 916 A1**
(43) Date of publication of application: **19.11.2008**
(21) Application number: 08156035.1
(22) Date of filing: 12.05.2008
(51) Int. Cl.: G01F 1/115, G01F 1/10

(54) **Liquid flow-rate digital measurement device**

(30) Priority: 15.05.2007 IT MN20070019
(71) Applicant: PIUSI S.p.A., 46029 Suzzara (MN) (IT)
(72) Inventor: Varini, Otto, 46029, SUZZARA MN (IT)
(74) Representative: Modiano, Micaela Nadia

(57) **Abstract**

A liquid flow-rate digital measurement device (1), comprising a turbine (4) inserted in the liquid conveyance duct (3) and associated with a shaft (6) which transmits, at a first end, an axial thrust to a corresponding support (7), the shaft (6) of the turbine (4) being made of stainless steel and being provided, at the first end, with a tip (10) which is made of wear-resistant material, an element made of wear-resistant material being inserted in the plastic body (2) of the measurement device (1) in such a position as to abut against the tip (10) of the turbine shaft (6).

## Description

The present invention relates to a liquid flow-rate digital measurement device.

It is known that there are digital devices for measuring the flow-rate of low-viscosity liquids, designed to be installed on the tubes for conveying such liquids, such as for example at the dispensing nozzle of a liquid in a tank, and provided with a display which is built into them and allows easy reading of the conveyed flow-rate.

Such devices comprise a body made of plastics, which delimits a liquid conveyance duct, and a small turbine is inserted in the duct and is provided with a permanent magnet which transmits pulses to a microprocessor, which is comprised within the body and is provided with an electronic board which comprises the above cited display.

The small turbine is associated with a shaft which is inserted, at its ends, in supports which are comprised within the body of the measurement device; during the rotation of the turbine determined by the passage of the liquid, said shaft transmits at one end an axial thrust to the corresponding support.

The aim of the present invention is to provide a digital measurement device in which wear is reduced to negligible values at the elements that respectively transmit and bear the axial thrust.

This aim is achieved by a liquid flow-rate digital measurement device according to the invention, comprising a body made of plastics which is adapted to delimit a liquid conveyance duct with a turbine inserted therein, said turbine being provided with a magnet which transmits pulses to a microprocessor comprised within said body and provided with an electronic board complete with a display for direct reading of the flow-rate of conveyed liquid, said turbine being associated with a shaft which transmits, at a first end, an axial thrust to the corresponding support, characterized in that the shaft of the turbine is made of stainless steel and is provided, at said first end, with a tip which is made of wear-resistant material, an element made of wear-resistant material being inserted in the plastic body of the measurement device in such a position as to abut against said tip of the turbine shaft.

Further characteristics and advantages of the present invention will become better apparent from the description of a preferred but not exclusive embodiment thereof, illustrated by way of non-limiting example in the accompanying drawings, wherein:

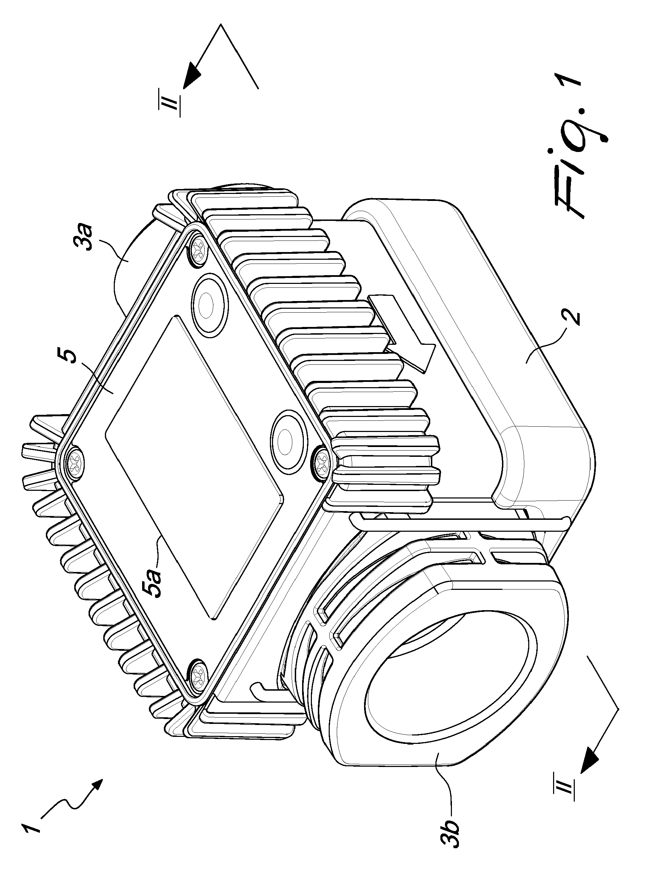

Figure 1 is a perspective view of the device according to the invention;

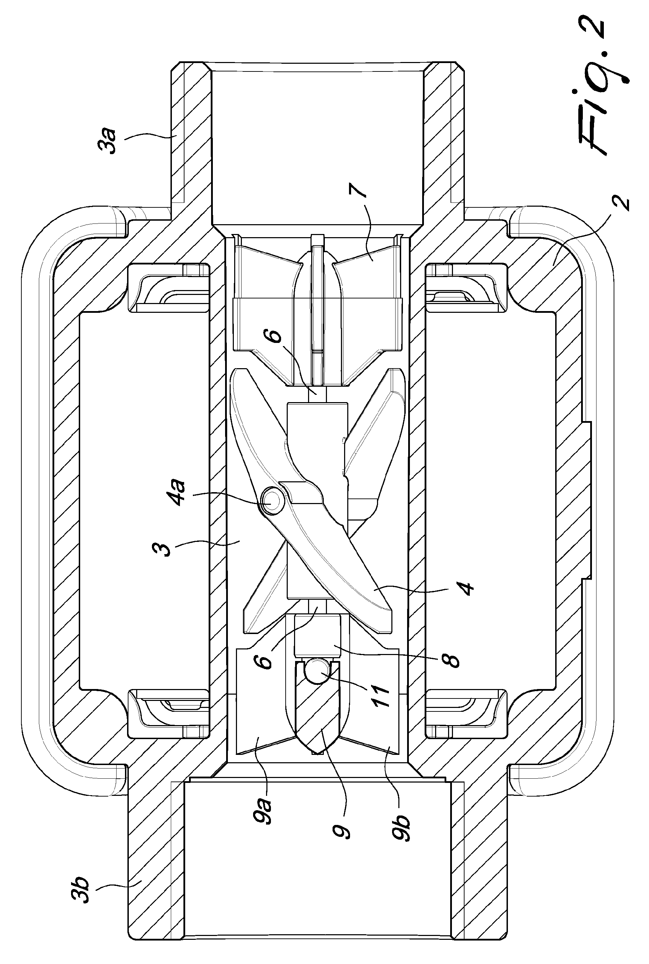

Figure 2 is a sectional view, taken along the line II-II of Figure 1;
Figure 3 is a perspective exploded view of the device according to the invention;
Figure 4 is a view of a detail of Figure 3.

With reference to the figures, the reference numeral 1 generally designates the flow-rate measurement device, which comprises a body 2 made of plastics which delimits a liquid conveyance duct 3 with an intake union 3a and a discharge union 3b.

A turbine 4 is inserted in the duct 3, is turned by the passage of the liquid and is provided with a permanent magnet 4a, which is adapted to send pulses to a microprocessor, not shown in the figures, which is comprised within the body 2 and is provided with an electronic board protected by a cover 5, which has an opening 5a so as to allow the reading of a display comprised in such electronic board, which provides at every instant the value of the flow-rate of the conveyed liquid.

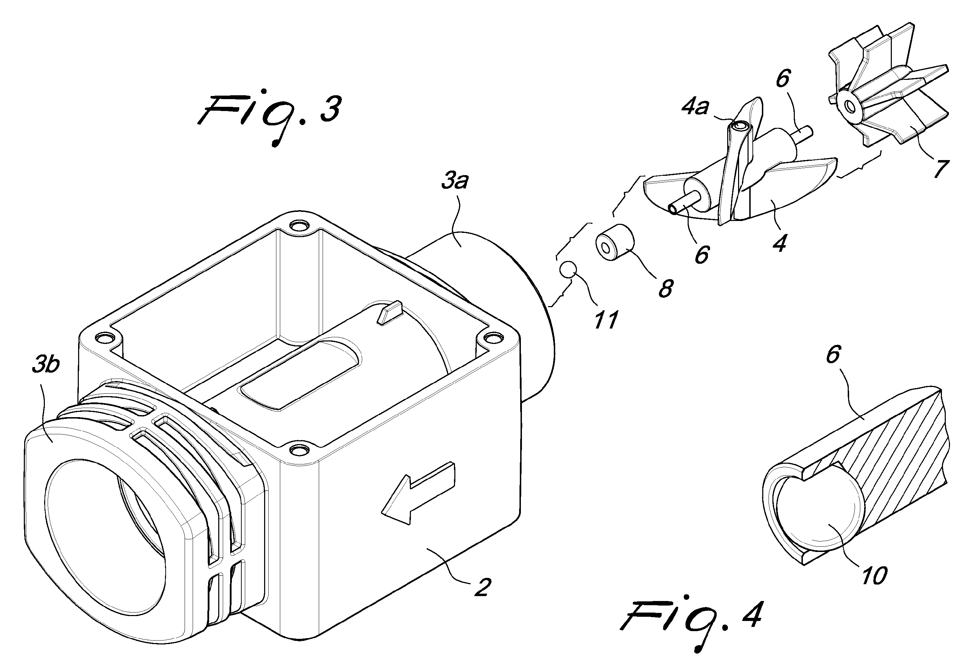

For the sake of completeness, it is noted that in Figure 3 the body 2 is shown without the electronic board.

The turbine 4 is associated with a shaft 6, which is inserted at one end in a finned support 7 and at the other end in a bush 8, which rest within the duct 3, and due to the shape of the turbine 4, the shaft 6 transmits an axial thrust which is directed toward an abutment 9, which is made of plastics like the body 2, from which it protrudes monolithically thanks to the presence of fins 9a, 9b.

An important feature of the device according to the invention consists in that the shaft 6 is made of stainless steel and is provided, at the end directed toward the abutment 9, with a tip constituted by a ball 10 made of wear resistance material such as ceramic, while in the abutment 9 a ball 11, also made of wear resistance material such as ceramic, is inserted in such a position as to come into contact with the ball 10.

This provides the dual condition of an embodiment obtained in terms of good production economy and of the assurance of long life due to the fact that the elements pushed into mutual contact are made of a material, such as ceramic, which has excellent wear resistance even at high temperature and in the presence of corrosive agents.

Instead of ceramics, it is possible to use a material such as hard metal, this term referencing sintered metallic powder that is a steel, which can be for example a case-hardening steel, which is conveniently surface-hardened.

The described invention is susceptible of numerous other modifications and variations, all of which are within the scope of the appended claims: thus, for example, the spherical shape of the elements 10 and 11 can be replaced with any shape.

The disclosures in Italian Patent Application No. MN2007A000019 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A liquid flow-rate digital measurement device (1), comprising a body (2) made of plastics which is adapted to delimit a liquid conveyance duct (3) with a turbine (4) inserted therein, said turbine (4) being provided with a magnet (4a) which transmits pulses to a microprocessor comprised within said body (2) and provided with an electronic board complete with a display for direct reading of the flow-rate of conveyed liquid, said turbine (4) being associated with a shaft (6) which transmits, at a first end, an axial thrust to a corresponding support (7), **characterized in that** the shaft (6) of the turbine (4) is made of stainless steel and is provided, at said first end, with a tip (10) which is made of wear-resistant material, an element (11) made of wear-resistant material being inserted in the plastic body (2) of the measurement device (1) in such a position as to abut against said tip (10) of the turbine shaft (6).

2. The measurement device according to claim 1, **characterized in that** the wear-resistant material is constituted by ceramic.

3. The measurement device according to claim 1, **characterized in that** the wear-resistant material is constituted by hard metal.

4. The measurement device according to claim 1, **characterized in that** the wear-resistant material is constituted by surface-hardened steel.

5. The measurement device according to one or more of the preceding claims, **characterized in that** both the tip (10) of the shaft (6) of the turbine (4) and the element (11) designed to abut against said tip (10) have a spherical shape.
